Europäisches Patentamt

European Patent Office

Office européen des brevets

(19)

(11) **EP 0 902 094 B1**

(12) **FASCICULE DE BREVET EUROPEEN**

(45) Date de publication et mention
de la délivrance du brevet:
**02.05.2003 Bulletin 2003/18**

(51) Int Cl.7: **C21D 1/78**, C21D 9/32
// C22C38/04, C22C38/18

(21) Numéro de dépôt: **98402218.6**

(22) Date de dépôt: **09.09.1998**

(54) **Procédé de fabrication d'une pièce de mécanique en acier comportant au moins une partie durcie superficiellement par un traitement de trempe par induction et pièce obtenue**

Verfahren zum Herstellen eines mechanischen Werkstücks mit mindestens ein mittels Induktion oberflächengehartetes Teil und also hergestelltes Werkstück

Process for manufacturing a mechanical workpiece with at least one part surface hardened by induction and workpiece obtained

(84) Etats contractants désignés:
**AT BE CH DE DK ES FI FR GB GR IE IT LI LU NL PT SE**

(30) Priorité: **12.09.1997 FR 9711350**

(43) Date de publication de la demande:
**17.03.1999 Bulletin 1999/11**

(73) Titulaire: **Ascometal**
**92800 Puteaux (FR)**

(72) Inventeur: **Pichard, Claude**
**57860 Malancourt La Montagne (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 0 643 148          DE-C- 3 244 361**
**FR-A- 2 645 544          US-A- 4 885 831**
**US-A- 5 181 375          US-A- 5 279 688**

• **PATENT ABSTRACTS OF JAPAN vol. 018, no. 361 (C-1222), 7 juillet 1994 & JP 06 093374 A (AICHI STEEL WORKS LTD), 5 avril 1994**

## Description

La présente invention concerne la fabrication d'une pièce de mécanique comportant au moins une partie durcie superficiellement par un traitement de trempe par induction, le traitement de trempe par induction comprenant au moins deux austénitisations successives, au moins la dernière austénitisation étant suivie d'une trempe permettant d'obtenir une structure martensitique de dureté supérieure à 800 HV.

De nombreuses pièces de mécaniques en acier sont soumises à des sollicitations en fatigue alternée ou de contact au voisinage de certaines parties de leur surface, c'est le cas, par exemple, des engrenages dont les dents sont soumises à des efforts de flexion alternée et de roulement et glissement. Ces pièces sont fabriquées par usinage ou par forgeage à chaud, à mi chaud ou à froid de blocs d'acier contenant, en général de 0,4 % à 0,6 % de carbone, de 0,5 % à 1 % de manganèse, éventuellement environ 1 % de chrome, éventuellement environ 0,1 % de vanadium et, éventuellement, environ 0,2 % de molybdène ; les blocs d'acier pouvant être, par exemple, des lopins ou des barres. Afin de durcir les parties les plus sollicitées, celles ci sont soumises à un traitement de trempe par induction comportant une ou plusieurs austénitisations successives suivies chacune d'une trempe énergique, par exemple à l'eau. Lorsque le traitement de trempe par induction comporte plusieurs austénitisations, la première (ou les premières) sont effectuées à l'aide d'un inducteur à moyenne fréquence et la dernière est effectuée à l'aide d'un inducteur à haute fréquence. On obtient ainsi des pièces dont les parties les plus sollicitées ont une structure principalement martensitique dont la dureté est comprise entre 600 HV et 790 HV.

Cette technique présente des inconvénients. D'une part, la dureté superficielle des parties trempées par induction et leur tenue en fatigue ne sont pas toujours suffisantes, d'autre part, les parties non trempée par induction ne sont pas toujours faciles à usiner. Il est possible d'augmenter la dureté des parties trempées par induction, par exemple, en augmentant la teneur en carbone. Cependant, cette technique présente l'inconvénient de rendre la fabrication plus difficile, notamment en favorisant l'apparition de tapures de trempe. EP-A-0 643 148 divulgue une pièce de mécanique constituée d'un acier dont la composition chimique comprend, en poids:

C: 0.35 à 0.70 %
Si: plus que 0.15 à 2.5 %
Mn: 0.2 à 1.5 %
Cr: 0.20 à 1.5 %
Mo: 0.05 à 0.5 %
S: plus que 0.01 à 0.15%
Al: 0.015 à 0.05%, et
N: 0.002 à 0.02 %,

et en plus comprenant P, Cu et O en quantités limitées respectivement à:

P: pas plus que 0.015%
Cu: pas plus que 0.05%, et
O: pas plus que 0.002%;

le reste étant du fer et des impuretés inévitables;
au moins une partie de la pièce est durcie par trempe par induction; et
un traitement thermique tel qu'une normalisation peut être fait avant le durcissement par induction, dans la mesure ou une certaine valeur minimale de la dureté moyenne de la pièce est obtenue; pour le cas où un tel traitement n'est pas fait avant le durcissement par induction, la production de la pièce par laminage à chaud est préférablement faite à une température de fin de laminage de 700 à 800 °C, et à une vitesse moyenne de refroidissement dans l'intervalle de 700 à 500 °C de 0.05 à 0.7 °C/s.

Le but de la présente invention est de remédier à ces inconvénients en proposant un procédé permettant de fabriquer sans risques de tapures de trempe des pièces de mécaniques dont une partie au moins est durcie en surface par trempe par induction, les parties durcies ayant une dureté et une tenue en fatigue améliorées, le reste de la pièce étant facilement usinable.

A cet effet, l'invention a pour objet un procédé de fabrication d'une pièce de mécanique comportant au moins une partie durcie superficiellement par un traitement de trempe par induction, le traitement de trempe par induction comprenant au moins deux austénitisations successives, au moins la dernière austénitisation étant suivie d'une trempe permettant d'obtenir une structure martensitique exempte de ferrite et de carbures non dissous, avec un grain fin d'indice ASTM supérieur ou égal à 7, et de dureté supérieure à 800 HV. Selon ce procédé, on se procure un bloc en acier dont la composition chimique comprend, en poids :

EP 0 902 094 B1

$$0,43\ \% \leq C \leq 0,62\ \%$$

$$0,5\ \% \leq Mn \leq 1,6\ \%$$

$$0\ \% \leq Si \leq 0,8\ \%$$

$$0\ \% \leq Ni \leq 0,5\ \%$$

$$0\ \% \leq Cr \leq 1,5\ \%$$

$$0\ \% \leq Mo \leq 0,35\ \%$$

$$0\% \leq V \leq 0,15\ \%$$

$$0,005\ \% \leq Al \leq 0,05\ \%$$

$$0,004\ \% \leq N \leq 0,022\ \%$$

éventuellement jusqu'à 0,1 % de soufre, jusqu'à 0,1 % de plomb, jusqu'à 0,012 % de tellure, jusqu'à 0,04 % de sélénium, jusqu'à 0,13 % de bismuth, jusqu'à 0,005 % de calcium, le reste étant du fer et des impuretés résultant de l'élaboration, la composition chimique satisfaisant, en outre, la relation :

$$0,95\ \% \leq Mn + Ni + Cr + Mo + V + Si \leq 3\ \%$$

- on effectue au moins une opération de mise en forme du bloc de façon à obtenir une ébauche de pièce, on effectue un traitement thermique de façon à obtenir, au moins dans la ou les parties de la pièce qui seront durcies superficiellement, une structure constituée de ferrite et d'au moins 80 % de perlite lamellaire, ledit traitement thermique étant effectué soit avant, soit entre deux opérations de mise en forme, soit après les opérations de mise en forme, et on effectue sur l'ébauche de la pièce le traitement de trempe superficielle.

De préférence, la composition chimique de l'acier est telle que :

$$Si \geq 0,1\ \%$$

$$Ni \geq 0,1\ \%$$

$$Cr \geq 0,1\ \%$$

$$Mo \geq 0,02\ \%$$

$$S \geq 0,01\ \%$$

Au moins une opération de mise en forme du bloc peut être un usinage et le traitement thermique destiné à obtenir une structure constitué de ferrite et d'au moins 80 % de perlite lamellaire est effectué avant cet usinage.

Au moins une opération de mise en forme peut, également, être un forgeage à chaud, à mi chaud ou à froid, et le traitement thermique destiné à obtenir une structure constituée de ferrite et d'au moins 80 % de perlite lamellaire est effectué après ce forgeage.

Le traitement thermique destiné à obtenir une structure constituée de ferrite et au moins 80 % de perlite lamellaire est, par exemple, une normalisation comprenant une austénitisation suivie d'un refroidissement lent contrôlé.

Lorsque au moins une opération de mise en forme est un forgeage à chaud, le traitement thermique destiné à obtenir une structure constituée de ferrite et au moins 80 % de perlite lamellaire peut être un refroidissement lent contrôlé effectué directement après forgeage, depuis la température de fin de forgeage.

L'invention concerne également un acier pour la fabrication d'une pièce de mécanique dont au moins une partie est durcie superficiellement par un traitement de trempe par induction comportant au moins deux austénitisations successives, dont la composition chimique comprend, en poids :

$$0,43 \% \leq C \leq 0,62 \%$$

$$0,5 \% \leq Mn \leq 1,6 \%$$

$$0,1 \% \leq Si \leq 0,8 \%$$

$$0,1 \% \leq Ni \leq 0,5 \%$$

$$0,1 \% \leq Cr \leq 1,5 \%$$

$$0,02 \% \leq Mo \leq 0,35 \%$$

$$0\% \leq V \leq 0,15 \%$$

$$0,005 \% \leq Al \leq 0,05 \%$$

$$0,004 \% \leq N \leq 0,022 \%$$

éventuellement jusqu'à 0,1 % de soufre, jusqu'à 0,1 % de plomb, jusqu'à 0,012 % de tellure, jusqu'à 0,04 % de sélénium, jusqu'à 0,13 % de bismuth, jusqu'à 0,005 % de calcium, le reste étant du fer et des impuretés résultant de l'élaboration, la composition chimique satisfaisant, en outre, la relation :

$$0,95 \% \leq Mn + Ni + Cr + Mo + V + Si \leq 3 \%$$

L'invention concerne, enfin, une pièce de mécanique constituée d'un acier dont la composition chimique comprend, en poids :

$$0,43 \% \leq C \leq 0,62 \%$$

$$0,5 \% \leq Mn \leq 1,6 \%$$

$$0 \% \leq Si \leq 0,8 \%$$

$$0 \% \leq Ni \leq 0,5 \%$$

$$0 \% \leq Cr \leq 1,5 \%$$

$$0 \% \leq Mo \leq 0,35 \%$$

$$0 \% \leq V \leq 0,15 \%$$

$$0,005 \% \leq Al \leq 0,05 \%$$

$$0,004 \% \leq N \leq 0,022 \%$$

éventuellement jusqu'à 0,1 % de soufre, jusqu'à 0,1 % de plomb, jusqu'à 0,012 % de tellure, jusqu'à 0,04 % de sélénium, jusqu'à 0,13 % de bismuth, jusqu'à 0,005 % de calcium, le reste étant du fer et des impuretés résultant de l'élaboration, la composition chimique satisfaisant, en outre, la relation : $0,95 \% \leq Mn + Ni + Cr + Mo + V + Si \leq 3 \%$ ; au moins une partie de la pièce ayant été durcie par trempe par induction a une structure martensitique exempte de ferrite et de carbures non dissous, une dureté superficielle supérieure à 800 HV et un grain fin d'indice ASTM supérieur ou égal à 7, le reste de la pièce ayant une structure constituée de ferrite et d'au moins 80 % de perlite lamellaire.

L'invention va maintenant être décrite plus en détails et illustrée par des exemples.

La composition chimique de l'acier destiné à fabriquer des pièces de mécaniques dont une partie est durcie par trempe par induction, comprend, en poids

- de 0,43 % à 0,62 % de carbone afin d'obtenir une dureté suffisante dans les parties trempées, tout en évitant l'apparition de tapures de trempe ;
- de 0,5 % à 1,6 % de manganèse pour obtenir une trempabilité suffisante, durcir la martensite et se combiner avec le soufre ajouté, éventuellement, pour améliorer l'usinabilité ;
- de 0,1 % à 0,8 % de silicium, pour désoxyder l'acier et durcir la martensite ;
- de 0% à 0,5 %, et, de préférence, plus de 0,1 % de nickel pour améliorer la tenue au choc des pièces, en particulier en dehors des parties durcies par trempe par induction ;
- de 0 % à 1,5 %, et de préférence plus de 0,1 % de chrome pour augmenter la trempabilité, durcir la martensite et faciliter l'austénitisation lors du traitement de trempe par induction ;
- de 0 % à 0,35 %, et de préférence plus de 0,02 %, de molybdène pour augmenter la trempabilité, augmenter la dureté de la martensite et éviter l'adoucissement local des pièces dans la zone de transition entre la surface trempée et le métal de base ;
- de 0 % à 0,15 % de vanadium pour améliorer la trempabilité, durcir la martensite et réduire le grossissement du grain en surface des parties trempées en cas de surchauffe locale lors des phases de chauffage par induction ;
- de 0,005 % à 0,05 % d'aluminium pour compléter la désoxydation et affiner le grain dans les parties de la pièce qui sont trempées ;
- de 0,004 % à 0,022 % d'azote pour former des nitrures d'aluminium et de vanadium.

L'acier peut contenir également jusqu'à 0,1 % de soufre, jusqu'à 0,1 % de plomb, jusqu'à 0,012 % de tellure, jusqu'à 0,04 % de sélénium, jusqu'à 0,13 % de bismuth, jusqu'à 0,005 % de calcium pour améliorer l'usinabilité. Le soufre est toujours présent en petites quantités, mais, pour que l'usinabilité soit satisfaisante, il est préférable que sa teneur ne descende pas en dessous de 0,01 %.

Le reste de la composition est constitué de fer et d'impuretés résultant de l'élaboration, en particulier du cuivre et du phosphore. De préférence, afin d'éviter de fragiliser l'acier en dehors des parties trempées, la teneur en cuivre doit rester inférieure à 0,3 % et la teneur en phosphore doit rester inférieure à 0,03 %.

Pour fabriquer une pièce de mécanique à l'aide de cet acier, plusieurs modes de réalisation sont possible.

Dans un premier mode de réalisation, on part d'une barre laminée à chaud à laquelle on fait subir un traitement thermique de normalisation constitué d'une austénitisation suivie d'un refroidissement lent contrôlé à une vitesse de refroidissement telle que la structure obtenue soit du type ferrite-perlite constituée de plus de 80 % de perlite lamellaire, le reste étant de la ferrite. Cette structure doit être exempte de constituants tels que de la bainite, de la martensite ou des carbures ; la bainite et la martensite étant défavorables à l'usinabilité, les carbures pouvant être difficiles à dissoudre complètement lors des austénitisations réalisées au cours du traitement de trempe par induction. De plus le grain doit avoir, de préférence, une taille caractérisée par un indice ASTM supérieur ou égal à 7. Au vu du diagramme de transformation en refroidissement continu de l'acier et de la section de la barre, l'Homme du Métier sait déterminer la température d'austénitisation et les conditions de refroidissement nécessaires pour obtenir la structure souhaitée. En particulier, la vitesse de refroidissement maximale admissible, qui dépend de la composition chimique, est toujours inférieure à 5 °C/s. Dans la barre ainsi traitée, on découpe un bloc qu'on usine pour obtenir une ébauche de la pièce. Cette ébauche est alors soumise à un traitement de trempe superficielle par induction, limité aux parties qui doivent être durcies. Ce traitement de trempe par induction comporte au moins deux austénitisation successives, au moins la dernière étant effectuée par chauffage par induction à l'aide d'in inducteur à haute fréquence (de l'ordre de 200 kHz, par exemple), et d'une trempe pouvant être effectuée à l'eau ou à l'eau additionnée d'un additif de trempe et destiné à obtenir une structure martensitique ; la ou les autres austénitisations précédentes étant effectuées à l'aide d'inducteurs à moyenne fréquence (de l'ordre de 10 kHz, par exemple), et pouvant ou non être suivies d'une trempe. On obtient ainsi, dans les couches durcies, au voisinage de la surface, une structure entièrement martensitique exempte de ferrite et de carbures non dissous lors de la dernière austénitisation. Ces couches durcies ont une dureté supérieure à 800 HV. Pour compléter la fabrication des pièces, on peut, en outre, effectuer un usinage de finition.

Dans une variante de ce mode de réalisation, le traitement thermique destiné à obtenir une structure ferrito-perlitique est effectué directement dans la chaude de laminage. Cela suppose notamment que la température de fin de laminage soit suffisante et que le refroidissement après laminage soit contrôlé.

Dans un autre mode de réalisation, la pièce est fabriquée par forgeage d'un bloc découpé dans un produit laminé. Le forgeage peut se faire à chaud, à mi-chaud ou à froid. Selon le mode de forgeage réalisé, le bloc ou le produit laminé peut ou non avoir été soumis à un traitement thermique préalable destiné à lui conférer une structure adaptée au forgeage ; en particulier, lorsque le forgeage est réalisé à froid, on effectue, en général, un traitement destiné à conférer à l'acier une structure ferrito-perlitique globulisée. Dans tous les cas, après le forgeage, l'ébauche de pièce est soumise à un traitement thermique constitué d'une austénitisation et d'un refroidissement contrôlé et destiné à conférer à l'acier une structure du type ferrite-perlite constituée de plus de 80 % de perlite lamellaire, le reste étant de la ferrite ; cette structure étant exempte de constituants tels que la bainite, la martensite ou des carbures. L'ébauche est alors usinée puis durcie en surface par trempe par induction dans les mêmes conditions que dans le mode de réalisation précédent, et les résultats obtenus sont identiques. Lorsque le forgeage est effectué à chaud, et lorsque la température de fin de forgeage est suffisante, le traitement destiné à obtenir une structure du type ferrite-perlite constitué de plus de 80 % de perlite lamellaire peut être effectué directement dans la chaude de forgeage en contrôlant la vitesse de refroidissement après forgeage.

Les modes de réalisation qui viennent d'être décrits ne sont pas limitatifs, l'essentiel étant que le traitement de trempe superficielle par induction soit effectué sur un acier ayant une structure du type ferrite-perlite constituée de plus de 80 % de perlite lamellaire, le reste étant de la ferrite ; cette structure étant exempte de constituants tels que la bainite, la martensite ou des carbures.

A titre d'exemple et de comparaison, on a fabriqué par usinage à partir d'une barre laminée, brute de laminage, deux pièces A et B de forme généralement cylindrique destinées à travailler en fatigue de contact sous forte pression. L'acier utilisé, conforme à l'invention avait la composition chimique suivante, en % en poids :

| C | Mn | Si | Ni | Cr | Mo | Cu | Al | V | N | Te | S | P |
|---|----|----|----|----|----|----|----|---|---|----|----|---|
| 0,5 | 0,92 | 0,25 | 0,18 | 0,95 | 0,03 | 0,1 | 0,025 | 0,11 | 0,006 | 0,005 | 0,035 | 0,014 |

Les deux pièces on été durcies en surface dans les mêmes conditions, par trempe superficielle, le traitement de trempe superficielle comportant une première austénitisation à l'aide d'un inducteur fonctionnant à 9 kHz, et une deuxième austénitisation à l'aide d'un inducteur fonctionnant à 190 kHz, cette dernière austénitisation étant suivie d'une trempe à l'eau.

Conformément à l'invention, avant d'effectuer le durcissement en surface, la pièce A a été soumise à un traitement thermique constitué d'une austénitisation à 900 °C pendant 15 mn suivi d'un refroidissement à une vitesse inférieure à 0,8 °C par seconde ; la structure obtenue étant du type ferrito-perlitique, constituée de plus de 95 % de perlite lamellaire, le reste étant de la ferrite, à l'exclusion de tout autre constituant. L'autre pièce, B, a été durcie en surface sans effectuer de traitement thermique préalable ; la structure était une structure mixte typique des barres brutes de laminage.

Après trempe superficielle, la structure de la couche durcie de la pièce A était entièrement martensitique à grain fin d'indice ASTM 8/9 et avait une dureté de 840 HV, alors que pour la pièce B, la structure était principalement martensitique mais contenait de la ferrite et des carbures, et sa dureté était de 780 HV seulement.

De plus, des essais de fatigue de contact sous une pression de contact de 1,5 GPa ont conduit à une détérioration significative de la surface de la pièce B après 5x10$^6$ cycles, alors que dans les mêmes conditions, la surface de la pièce A n'était pratiquement pas détériorée.

**Revendications**

1. Procédé de fabrication d'une pièce de mécanique comportant au moins une partie durcie superficiellement par un traitement de trempe par induction, le traitement de trempe par induction comprenant au moins deux austénitisations successives, au moins la dernière austénitisation étant suivie d'une trempe permettant d'obtenir une structure martensitique de dureté supérieure à 800 HV exempte de ferrite et de carbures non dissous à grains fins d'indice ASTM supérieure ou égal à 7, dans lequel

   - on se procure un bloc en acier dont la composition chimique comprend, en poids :

$$0,43\ \% \leq C \leq 0,62\ \%$$

$$0,5\ \% \leq Mn \leq 1,6\ \%$$

$$0\ \% \leq Si \leq 0,8\ \%$$

$$0\ \% \leq Ni \leq 0,5\ \%$$

$$0\ \% \leq Cr \leq 1,5\%$$

$$0\ \% \leq Mo \leq 0,35\ \%$$

$$0\% \leq V \leq 0,15\ \%$$

$$0,005\ \% \leq Al \leq 0,05\ \%$$

$$0,004\ \% \leq N \leq 0,022\ \%$$

   éventuellement jusqu'à 0,1 % de soufre, jusqu'à 0,1 % de plomb, jusqu'à 0,012 % de tellure, jusqu'à 0,04 % de sélénium, jusqu'à 0,13 % de bismuth, jusqu'à 0,005 % de calcium, le reste étant du fer et des impuretés résultant de l'élaboration, la composition chimique satisfaisant, en outre, la relation :

$$0,95\ \% \leq Mn + Ni + Cr + Mo + V + Si \leq 3\ \%$$

   - on effectue au moins une opération de mise en forme du bloc de façon à obtenir une ébauche de pièce, on effectue un traitement thermique de façon à obtenir, au moins dans la ou les parties de la pièce qui seront durcies superficiellement, une structure constituée de ferrite et d'au moins 80 % de perlite lamellaire, ledit traitement thermique étant effectué soit avant, soit entre deux opérations de mise en forme, soit après les opérations de mise en forme, et on effectue sur l'ébauche de la pièce le traitement de trempe superficielle.

2. Procédé selon la revendication 1 **caractérisé en ce que** la composition chimique de l'acier est telle que :

$$Si \geq 0,1\ \%$$

Ni ≥ 0,1 %

Cr ≥ 0,1 %

Mo ≥ 0,02 %

S ≥ 0,01 %

3. Procédé selon la revendication 1 ou la revendication 2 **caractérisé en ce que** au moins une opération de mise en forme du bloc est un usinage, et **en ce que** le traitement thermique destiné à obtenir une structure constitué de ferrite et d'au moins 80 % de perlite lamellaire est effectué avant l'usinage.

4. Procédé selon la revendication 1, la revendication 2 ou la revendication 3, **caractérisé en ce que** au moins une opération de mise en forme est un forgeage à chaud, à mi chaud ou à froid, et **en ce que** le traitement thermique destiné à obtenir une structure constitué de ferrite et d'au moins 80 % de perlite lamellaire est effectué après le forgeage.

5. Procédé selon l'une quelconque des revendications 1 à 4 **caractérisé en ce que** le traitement thermique destiné à obtenir une structure constituée de ferrite et au moins 80 % de perlite lamellaire est une normalisation comprenant une austénitisation suivie d'un refroidissement lent contrôlé.

6. Procédé selon la revendication 5 **caractérisé en ce que**, lorsque au moins une opération de mise en forme est un forgeage à chaud, le traitement thermique destiné à obtenir une structure constituée de ferrite et au moins 80 % de perlite lamellaire est un refroidissement lent contrôlé effectué directement après forgeage, depuis la température de fin de forgeage.

7. Pièce de mécanique constituée d'un acier dont la composition chimique comprend, en poids :

0,43 % ≤ C ≤ 0,62 %

0,5 % ≤ Mn ≤ 1,6 %

0 % ≤ Si ≤ 0,8 %

0 % ≤ Ni ≤ 0,5 %

0% ≤ Cr ≤ 1,5 %

0 % ≤ Mo ≤ 0,35 %

0 % ≤ V ≤ 0,15 %

0,005 % ≤ Al ≤ 0,05 %

0,004 % ≤ N ≤ 0,022 %

éventuellement jusqu'à 0,1 % de soufre, jusqu'à 0,1 % de plomb, jusqu'à 0,012 % de tellure, jusqu'à 0,04 % de sélénium, jusqu'à 0,13 % de bismuth, jusqu'à 0,005 % de calcium, le reste étant du fer et des impuretés résultant de l'élaboration, la composition chimique satisfaisant, en outre, la relation :

$$0,95 \% \leq Mn + Ni + Cr + Mo +V +Si \leq 3 \%$$

en ce que au moins une partie de la pièce a été durcie par trempe par induction, cette partie ayant une structure martensitique exempte de ferrite et de carbures non dissous ayant un grain fin d'indice ASTM supérieur ou égal à 7 et une dureté supérieure à 800 HV, et en ce que le reste de la pièce a une structure constituée de ferrite et d'au moins 80 % de perlite lamellaire.

**Patentansprüche**

1. Verfahren zum Herstellen eines mechanischen Werkstücks, das wenigstens einen durch eine Induktionshärtungsbehandlung oberflächlich gehärteten Teil aufweist, wobei die Induktionshärtungsbehandlung wenigstens zwei aufeinanderfolgende Austenitisierungen umfasst und wenigstens auf die letzte Austenitisierung eine Härtung folgt, die es ermöglicht, eine martensitische Struktur mit einer Härte von mehr als 800 HV, frei von Ferrit und ungelösten Carbiden, mit Feinkörnern, deren ASTM-Index größer/gleich 7 ist, zu erzielen, wobei

- ein Block aus Stahl gebildet wird, dessen chemische Zusammensetzung folgende Gewichtsanteile aufweist:

$$0,43 \% \leq C \leq 0,62 \%$$

$$0,5 \% \leq Mn \leq 1,6 \%$$

$$0 \% \leq Si \leq 0,8 \%$$

$$0 \% \leq Ni \leq 0,5 \%$$

$$0 \% \leq Cr \leq 1,5 \%$$

$$0 \% \leq Mo \leq 0,35 \%$$

$$0 \% \leq V \leq 0,15 \%$$

$$0,005 \% \leq Al \leq 0,05 \%$$

$$0,004 \% \leq N \leq 0,022 \%,$$

eventuell bis zu 0,1 % Schwefel, bis zu 0,1 % Blei, bis zu 0,012 % Tellur, bis zu 0,04 % Selen, bis zu 0,13 % Wismut, bis zu 0,005 % Calcium, wobei der Rest Eisen und Verunreinigungen sind, die aus der Herstellung rühren, und wobei die chemische Zusammensetzung außerdem folgender Beziehung genügt:

$$0,95 \% \leq Mn + Ni + Cr + Mo + V + Si \leq 3 \%$$

- wenigstens ein Arbeitsgang zur Formung des Blocks in der Weise erfolgt, dass ein Werkstückrohling gewonnen wird, eine Wärmebehandlung in der Weise erfolgt, dass wenigstens an dem oder den Teilen des Werkstücks, die später an der Oberfläche gehärtet werden, eine Struktur erzielt wird, die aus Ferrit und wenigstens 80 % streifigem Perlit besteht, wobei die Wärmebehandlung entweder vor oder zwischen zwei Formgebungsvorgängen oder nach den Formgebungsvorgängen erfolgt, und auf dem Werkstückrohling die Oberflächenhärtungsbehandlung erfolgt.

2. Verfahren nach Anspruch 1, **dadurch gekennzeichnet, dass** die chemische Zusammensetzung des Stahls so ausgebildet ist, dass:

$$Si \geq 0,1 \%$$

$$Ni \geq 0,1 \%$$

$$Cr \geq 0,1 \%$$

$$Mo \geq 0,02 \%$$

$$S \geq 0,01 \%.$$

3. Verfahren nach Anspruch 1 oder Anspruch 2, **dadurch gekennzeichnet, dass** wenigstens ein Arbeitsgang zur Formung des Blocks eine maschinelle Bearbeitung ist und dass die Wärmebehandlung, die dazu bestimmt ist, eine Struktur zu erzielen, die aus Ferrit und wenigstens 80 % streifigem Perlit besteht, vor der maschinellen Bearbeitung erfolgt.

4. Verfahren nach Anspruch 1, Anspruch 2 oder Anspruch 3, **dadurch gekennzeichnet, dass** wenigstens ein Formgebungsarbeitsgang ein Warm-, Halbwarm- oder Kaltschmiedevorgang ist und dass die Wärmebehandlung, die dazu bestimmt ist, eine Struktur zu erzielen, die aus Ferrit und wenigstens 80 % streifigem Perlit besteht, nach dem Schmiedevorgang erfolgt.

5. Verfahren nach einem der Ansprüche 1 bis 4, **dadurch gekennzeichnet, dass** die Wärmebehandlung, die dazu bestimmt ist, eine Struktur zu erzielen, die aus Ferrit und wenigstens 80 % streifigem Perlit besteht, ein Normalglühen mit einer Austenitisierung ist, gefolgt von einer gesteuerten langsamen Abkühlung.

6. Verfahren nach Anspruch 5, **dadurch gekennzeichnet, dass**

- wenn wenigstens ein Formgebungsarbeitsgang ein Warmschmiedevorgang ist - die Wärmebehandlung, die dazu bestimmt ist, eine aus Ferrit und wenigstens 80 % streifigem Perlit bestehende Struktur zu erzielen, eine gesteuerte langsame Abkühlung ist, die unmittelbar nach dem Schmiedevorgang erfolgt, ausgehend von der Endtemperatur des Schmiedens.

7. Mechanisches Werkstück aus einem Stahl, dessen chemische Zusammensetzung folgende Gewichtsanteile aufweist:

$$0,43 \% \leq C \leq 0,62 \%$$

$$0,5 \% \leq Mn \leq 1,6 \%$$

$$0 \% \leq Si \leq 0,8 \%$$

$$0\ \% \le Ni \le 0,5\ \%$$

$$0\ \% \le Cr \le 1,5\ \%$$

$$0\ \% \le Mo \le 0,35\ \%$$

$$0\ \% \le V \le 0,15\ \%$$

$$0,005\ \% \le Al \le 0,05\ \%$$

$$0,004\ \% \le N \le 0,022\ \%,$$

eventuell bis zu 0,1 % Schwefel, bis zu 0,1 % Blei, bis zu 0,012 % Tellur, bis zu 0,04 % Selen, bis zu 0,13 % Wismut, bis zu 0,005 % Calcium, wobei der Rest Eisen und Verunreinigungen sind, die aus der Herstellung rühren, und wobei die chemische Zusammensetzung außerdem folgender Beziehung genügt:

$$0,95\ \% \le Mn + Ni + Cr + Mo + V + Si \le 3\ \%,$$

wobei wenigstens ein Teil des Werkstücks durch Induktionshärtung gehärtet wurde und dieser Teil eine von Ferrit und ungelösten Carbiden freie martensitische Struktur aufweist, die eine Feinkörnung mit einem ASTM-Index größer/gleich 7 und eine Härte von mehr als 800 HV hat, und
wobei der Rest des Werkstücks eine Struktur hat, die aus Ferrit und wenigstens 80 % streifigem Perlit besteht.

**Claims**

1. Process for manufacturing a mechanical workpiece comprising at least one part which has been surface-hardened by an induction hardening treatment, the induction hardening treatment comprising at least two successive austenitisations, at least the last austenitisation being followed by hardening to obtain a fine-grained martensitic structure with a hardness of more than 800 HV free from ferrite and undissolved carbides, with an ASTM index greater than or equal to 7, wherein

- a steel block is obtained the chemical composition of which comprises, by weight:

$$0.43\ \% \le C \le 0.62\ \%$$

$$0.5\ \% \le Mn \le 1.6\ \%$$

$$0\ \% \le Si \le 0.8\ \%$$

$$0\ \% \le Ni \le 0.5\ \%$$

$$0\ \% \le Cr \le 1.5\ \%$$

$$0\ \% \le Mo \le 0.35\ \%$$

**11**

$$0 \% \leq V \leq 0.15 \%$$

$$0.005 \% \leq Al \leq 0.05 \%$$

$$0.004 \% \leq N \leq 0.022 \%$$

optionally up to 0.1 % of sulphur, up to 0.1 % of lead, up to 0.012 % of tellurium, up to 0.04 % of selenium, up to 0.13 % of bismuth, up to 0.005 % of calcium, the remainder being iron and impurities resulting from the manufacturing process, the chemical composition further satisfying the equation:

$$0.95 \% \leq Mn + Ni + Cr + Mo + V + Si \leq 3 \%$$

- at least one shaping operation is carried out on the block so as to obtain a blank, heat treatment is carried out so as to obtain, at least in that part or those parts of the workpiece which will be surface-hardened, a structure made up of ferrite and at least 80 % of lamellar perlite, said heat treatment being carried out either before, between two shaping operations, or after the shaping operations, and the surface hardening treatment is carried out on the workpiece blank.

2. Process according to claim 1, **characterised in that** the chemical composition of the steel is such that:

$$Si \geq 0.1 \%$$

$$Ni \geq 0.1 \%$$

$$Cr \geq 0.1 \%$$

$$Mo \geq 0.02 \%$$

$$S \geq 0.01 \%$$

3. Process according to claim 1 or 2, **characterised in that** at least one shaping operation of the block is a machining operation and **in that** the heat treatment intended to produce a structure made up of ferrite and at least 80 % of lamellar perlite is carried out before the machining.

4. Process according to claim 1, claim 2 or claim 3, **characterised in that** at least one shaping operation is a hot-, semi-hot- or cold-forging process and **in that** the heat treatment intended to produce a structure made up of ferrite and at least 80 % of lamellar perlite is carried out after the forging.

5. Process according to any one of claims 1 to 4, **characterised in that** the heat treatment intended to produce a structure made up of ferrite and at least 80 % of lamellar perlite is a normalisation comprising austenitisation followed by slow controlled cooling.

6. Process according to claim 5, **characterised in that**, when at least one shaping operation is a hot forging, the heat treatment intended to produce a structure made up of ferrite and at least 80 % of lamellar perlite is a slow controlled cooling carried out directly after the forging, starting from the temperature at the end of forging.

7. Mechanical workpiece consisting of a steel the chemical composition of which comprises, by weight:

$$0.43\ \% \le C \le 0.62\ \%$$

$$0.5\ \% \le Mn \le 1.6\ \%$$

$$0\ \% \le Si \le 0.8\ \%$$

$$0\ \% \le Ni \le 0.5\ \%$$

$$0\ \% \le Cr \le 1.5\ \%$$

$$0\ \% \le Mo \le 0.35\ \%$$

$$0\ \% \le V \le 0.15\ \%$$

$$0.005\ \% \le Al \le 0.05\ \%$$

$$0.004\ \% \le N \le 0.022\ \%$$

optionally up to 0.1 % of sulphur, up to 0.1 % of lead, up to 0.012 % of tellurium, up to 0.04 % of selenium, up to 0.13 % of bismuth, up to 0.005 % of calcium, the remainder being iron and impurities resulting from the manufacturing process, the chemical composition further satisfying the equation:

$$0.95\ \% \le Mn + Ni + Cr + Mo + V + Si \le 3\ \%$$

in that at least part of the workpiece has been hardened by induction hardening, this part having a fine-grained martensitic structure free from ferrite and undissolved carbides, with an ASTM index greater than or equal to 7 and a hardness of more than 800 HV, and in that the remainder of the workpiece has a structure consisting of ferrite and at least 80 % of lamellar perlite.